# EUROPÄISCHE PATENTSCHRIFT

(11) **EP 4 121 382 B1**
(45) Veröffentlichungstag und Bekanntmachung des Hinweises auf die Patenterteilung: **26.02.2025**
(21) Anmeldenummer: 21713360.2
(22) Anmeldetag: 17.03.2021
(51) Int. Cl.: B65H 54/52

(54) **SCHWINGUNGSDÄMPFUNGSEINRICHTUNG FÜR EINE SPULVORRICHTUNG EINER KREUZSPULEN HERSTELLENDEN TEXTILMASCHINE**
VIBRATION-DAMPING APPARATUS FOR A WINDING DEVICE OF A TEXTILE MACHINE WHICH PRODUCES CROSS-WOUND PACKAGES
APPAREIL D'AMORTISSEMENT DES VIBRATIONS POUR UN DISPOSITIF D'ENROULEMENT D'UNE MACHINE À TEXTILE PRODUISANT DES BOBINES CROISÉES

(30) Priorität: 19.03.2020 DE 102020107585
(43) Veröffentlichungstag der Anmeldung: 25.01.2023
(73) Patentinhaber: Saurer Spinning Solutions GmbH & Co. KG, 52531 Übach-Palenberg (DE)
(72) Erfinder: MARX, Alexander, 41379 Brüggen (DE); KALBERTODT, René, 52525 Heinsberg (DE)
(74) Vertreter: Morgenthum-Neurode, Mirko
(86) Internationale Anmeldenummer: PCT/EP2021/056748
(87) Internationale Veröffentlichungsnummer: WO 2021/185877

(56) Entgegenhaltungen:
- EP-B1- 2 808 284
- DE-A1- 19 515 601
- DE-A1- 19 853 316
- DE-A1- 3 809 421

## Beschreibung

Die Erfindung betrifft eine Schwingungsdämpfungseinrichtung für eine Spulvorrichtung einer Kreuzspulen herstellenden Textilmaschine zur Reduzierung der während des Spulbetriebes der Textilmaschine am schwenkbar gelagerten Spulenrahmen auftretenden Schwingungen.

Bei Kreuzspulen herstellenden Textilmaschinen, beispielsweise Offenend-Rotorspinnmaschinen oder Kreuzspulautomaten, besteht während des Spulbetriebes stets die Gefahr, dass es an den Arbeitsstellen beim Spulen der Kreuzspulen zu starken Schwingungen der Spulenrahmen kommt. Insbesondere zu Beginn einer Spulenreise sowie bei der Herstellung relativ harter Kreuzspulen besteht dabei oft die Gefahr, dass die Amplitude der Rahmenschwingung so groß wird, dass der Spulprozess entscheidend beeinträchtigt wird, das heißt, dass Kreuzspulen gefertigt werden, die später kaum noch abspulbar und damit unbrauchbar sind.

Um die Herstellung solcher minderwertigen Kreuzspulen zu vermeiden, sind bei den bekannten Spinn- oder Spulmaschinen die schwenkbar gelagerten Spulenrahmen der Spulvorrichtungen in der Regel jeweils mit einer Schwingungsdämpfungseinrichtung ausgestattet. Das heißt, der schwenkbar gelagerte Spulenrahmen, der zwei Spulenrahmenarme zum frei drehbaren Haltern einer Kreuzspule aufweist, verfügt über eine Dämpfungseinrichtung, die gewährleisten soll, dass die während des Spulbetriebes nahezu unvermeidlichen Schwingungen des Spulenrahmens möglichst minimiert werden.

Derartige Dämpfungseinrichtungen für schwenkbar gelagerte Spulenrahmen sind seit langem bekannt und in der Patentliteratur in verschiedenen Ausführungsformen zum Teil relativ ausführlich beschrieben.

Es sind beispielsweise Schwingungsdämpfungseinrichtungen Stand der Technik, die über einen Dämpfungs- und Hebezylinder verfügen. Solche Dämpfungs- und Hebezylinder weisen eine pneumatisch arbeitende Einrichtung zum definierten Abheben einer im Spulenrahmen gehalterten Kreuzspule von ihrer Spulenantriebs- oder Stützwalze sowie eine hydraulisch arbeitende Dämpfungseinrichtung auf. Die Dämpfungseinrichtung arbeitet dabei vorzugsweise mit Öl als Dämpfungsmittel. Das heißt, durch Strömungsbeeinflussung des flüssigen Dämpfungsmittels wird eine Reduzierung der während des Spulbetriebes auftretenden Spulenrahmenschwingungen erreicht.

Eine derartig ausgebildete Schwingungsdämpfungseinrichtung ist zum Beispiel im Handbuch "AUTOCONER 238" der Fa. Schlafhorst auf den Seiten 01.3.9 und 01.3.11 beschrieben.

Auch durch die DE 41 21 780 A1, die DE 195 34 333 A1 oder die DE 100 46 603 A1 sind vergleichbare Schwingungsdämpfungseinrichtungen für die Spulvorrichtungen von Kreuzspulen herstellenden Textilmaschinen bekannt. Das heißt, auch in diesen Patentanmeldungen sind Spulvorrichtungen beschrieben, bei denen die Dämpfungseinrichtungen für den Spulenrahmen als Hydraulikzylinder ausgebildet sind.

In der DE 41 21 780 A1 ist beispielsweise dargestellt und beschrieben, dass bei solchen Hydraulikzylindern die Kolben jeweils mit einigen Durchbrechungen ausgestattet sind, durch die bei Schwingungen des Spulenrahmens das im Zylinder befindliche Dämpfungsmedium, zum Beispiel Hydrauliköl, strömt, was zu einer Dämpfung der Schwingungen des Spulenrahmens führt.

Auch die in der DE 100 46 603 A1 beschriebene Schwingungsdämpfungseinrichtung arbeitet mit einem ähnlichen Hydraulikzylinder. Bei dieser bekannten Dämpfungseinrichtung wird das Dämpfungsmedium des Hydraulikzylinders allerdings durch eine rheologisch veränderbare Flüssigkeit gebildet, das heißt, durch eine Flüssigkeit, deren Viskosität mittels eines magnetischen Felderzeugers verändert werden kann. Bei diesen bekannten, als Hydraulikzylinder ausgebildeten Dämpfungszylindern ist zwischen dem Zylinderunterteil und dem Zylinderoberteil ein Dichtungsring angeordnet.

Außerdem weisen solche Dämpfungszylinder eine Kolbenstangendichtung auf, die verhindern soll, dass Dämpfungsmedium aus dem Hydraulikzylinder austreten kann. Obwohl die Dichtungselemente dieser bekannten Dämpfungszylinder im Laufe der Zeit ständig verbessert wurden, besteht bei solchen hydraulisch arbeitenden Dämpfungszylindern doch stets die Gefahr, dass es zu einem Austritt von Dämpfungsmedium kommt, was nicht nur zu einer Verschmutzung des Umfeldes und oft zu einer nicht sofort bemerkbaren Verschlechterung des Dämpfungsverhaltens führt, sondern in Verbindung mit dem in Textilbetrieben nahezu unvermeidlichen Faserstaub auch eine nicht unerhebliche Brandgefahr darstellt.

In der Vergangenheit sind deshalb bereits verschiedene Versuche unternommen worden, derartige hydraulisch arbeitende Dämpfungseinrichtungen durch Dämpfungseinrichtungen zu ersetzen, die kein flüssiges Dämpfungsmedium benötigen.

In der schweizerischen Patentschrift CH 374 003 ist beispielsweise eine Dämpfungseinrichtung beschrieben, die einen bestrombaren Elektromagneten aufweist, welcher eine Ankerplatte beaufschlagt, die ihrerseits über eine Stange mit dem zu dämpfenden schwenkbar gelagerten Spulenrahmen in Verbindung steht. Das heißt, bei dieser bekannten Dämpfungseinrichtung wird mittels eines Elektromagneten, der bekanntermaßen eine bestrombare Spule beinhaltet, eine Kraftkomponente erzeugt, die die an den Spulenrahmen angeschlossene ferromagnetische Ankerplatte an ein stationäres Widerlager presst. Bei dieser bekannten Dämpfungseinrichtung ergibt sich folglich das Dämpfungsverhalten aus der mechanischen Reibung zwischen der beweglich gelagerten Ankerplatte und dem stationären Widerlager.

Eine vergleichbare, allerdings berührungslos arbeitende, elektromagnetische Dämpfungseinrichtung ist auch durch die DE 100 12 005 B4 bekannt. Diese Dämpfungseinrichtung weist ein bewegliches, elektrisch leitfähiges Bauelement auf, das zumindest mittelbar mit dem Spulenrahmen verbunden und derart angeordnet ist, dass das Bauelement berührungslos das Magnetfeld eines stationär angeordneten Magnetsystems schneidet. Bei dieser bekannten Dämpfungseinrichtung beruht das Dämpfungsverhalten auf der Entstehung von Wirbelströmen in dem elektrisch leitfähigen Bauteil. In der Praxis hat sich allerdings gezeigt, dass sowohl die Dämpfungseinrichtungen gemäß CH-PS 374 003 als auch die Dämpfungseinrichtungen gemäß DE 100 12 005 B4 verschiedene Nachteile aufweisen. Bei den Dämpfungseinrichtungen, die auf dem Wirbelstromprinzip beruhen, reichte beispielsweise die durch das Magnetfeld des Magnetsystems auf das leitfähige Bauteil induzierte Kraft nicht aus, um eine zufriedenstellende Dämpfung zu erreichen. Die vorstehend beschriebenen Dämpfungseinrichtungen konnten sich in der Praxis nie durchsetzen.

Des Weiteren sind auch durch die DE 26 06 859 A1, die DE 10 2007 047 554 A1 oder die DE 199 24 390 A1 Spulvorrichtungen für die Arbeitsstellen von Kreuzspulen herstellenden Textilmaschinen bekannt, bei denen der am Maschinenrahmen der Textilmaschine schwenkbar gelagerte Spulenrahmen jeweils mit einer Dämpfungseinrichtung ausgestattet ist. Die Dämpfungseinrichtungen arbeiten dabei, ähnlich wie die durch die CH-PS 374 003 bekannte Dämpfungseinrichtung, als Reibungsdämpfer.

Bei der Einrichtung gemäß DE 26 06 859 A1 ist beispielweise ein beweglich gelagerter Spulenrahmen mit einem gedämpft gelagerten Bremselement ausgestattet, das mit einem stationären Gegenkörper korrespondiert. Das heißt, das Bremselement verfügt über Bremsbacken, die an einem am Maschinenrahmen der Textilmaschine stationär angeordneten Gegenkörper anliegen.

Eine mit einem Reibelement ausgestattete Einrichtung zum Dämpfen der während des Spulprozesses einer Kreuzspule am Spulenrahmen auftretenden Schwingungen ist auch in der DE 10 2007 047 554 A1 beschrieben. Bei dieser Dämpfungseinrichtung wird ein ebenfalls am Maschinenrahmen der Textilmaschine stationär angeordneter Gegenkörper durch ein Reibelement beaufschlagt, das durch einen Pneumatikzylinder beaufschlagbar ist.

Die in der DE 199 24 390 A1 beschriebene Dämpfungseinrichtung weist eine am Spulenrahmen beweglich befestigte Führungsstange auf, die mit Bremselementen einer am Maschinenrahmen der Textilmaschine angeordneten, begrenzt beweglich gelagerten Zylindereinrichtung korrespondiert. Das heißt, in der Zylindereinrichtung ist unter anderem ein verschiebbarer, pneumatisch betätigbarer Kolben gelagert, der ein Bremselement an die Führungsstange anlegt und dabei ein Reibungsmoment initiiert, das zu einer Schwingungsdämpfung des betreffenden Spulenrahmens während des Spulbetriebes führt.

Weitere Schwingungsdämpfungseinrichtungen mit den oberbegrifflichen Merkmalen des Anspruchs 1 sind beispielsweise aus den Dokumenten DE 38 09 421 A1, DE 195 15 601 A1 und DE 198 53 316 A1 bekannt.

Wie vorstehend angedeutet, weisen die bekannten Dämpfungseinrichtungen verschiedene Nachteile auf, das bedeutet, diese Dämpfungseinrichtungen sind verbesserungsfähig.

Ausgehend vom vorgenannten Stand der Technik liegt der Erfindung die Aufgabe zugrunde, einen Schwingungsdämpfer für einen schwenkbar gelagerten Spulenrahmen einer Spulvorrichtung einer Kreuzspulen herstellenden Textilmaschine zu entwickeln, der sowohl bezüglich seiner Verschmutzungsanfälligkeit unproblematisch ist, als auch während des Spulprozesses einen schwingungstechnisch relativ stabilen Zustand des Spulenrahmens gewährleistet.

Diese Aufgabe wird erfindungsgemäß durch einen Schwingungsdämpfer mit den Merkmalen des Anspruchs 1 gelöst.

Vorteilhafte Ausführungsformen der Erfindung sind Gegenstand der Unteransprüche.

Der erfindungsgemäß ausgebildete Schwingungsdämpfer hat nicht nur den Vorteil, dass durch die Ausbildung als mechanisch arbeitender Reibungsdämpfer die Gefahr einer Verschmutzung der Arbeitsstelle durch austretendes Dämpfungsmedium beseitigt wird, sondern auch, dass durch die spezielle, erfindungsgemäße Ausführung des Reibungsdämpfers während des Spulprozesses das Problem des ständigen schwingungsbedingten Abhebens der Kreuzspule minimiert wird. Das heißt, der erfindungsgemäß ausgebildete Reibungsdämpfer erzeugt richtungsabhängige Reibkräfte, wobei die Reibkräfte, die beim Abheben der Kreuzspule in Sperrrichtung tätig werden, deutlich größer sind als die Reibkräfte, die während des Absenkens der Kreuzspule wirksam sind. Die kompakte Bauweise des Reibungsdämpfers ermöglicht außerdem auch einen nachträglichen Einbau der erfindungsgemäßen Dämpfungseinrichtung an Arbeitsstellen von Textilmaschinen, deren Spulenrahmen bislang mit hydraulischen Dämpfungszylindern ausgestattet sind. Das heißt, um die erfindungsgemäß ausgebildeten Reibungsdämpfer vorteilhaft einsetzen zu können, sind im Bereich der Arbeitsstellen von Textilmaschinen lediglich einige kleinere Modifikationen erforderlich.

Der Reibungsdämpfer verfügt über eine Bremsstange, die bezüglich des Dämpfergehäuses des Schwingungsdämpfers verschiebbar gelagert ist, über ein stationär angeordnetes erstes Bremselement sowie über ein durch einen Stützhebel an die Bremsstange anstellbares, beweglich gelagertes, zweites Bremselement.

Eine solche Ausbildung führt dazu, dass der Reibungsdämpfer eine Sperr- und eine Leerlaufrichtung aufweist. Der Stützhebel ist zu diesem Zweck bezüglich der Bremsstange so unter einem Winkel angeordnet, dass das zweite Bremselement automatisch verstärkt an die Bremsstange angedrückt wird, wenn die Kreuzspule versucht, von ihrer zugehörigen Spulenantriebstrommel abzuheben. Das heißt, wenn während des Spulprozesses die auf der Spulenantriebstrommel aufliegende und von dieser reibschlüssig angetriebene Kreuzspule beispielsweise aufgrund einer kleinen Unrundheit zu vibrieren beginnt, werden sofort Kraftmomente auf den Spulenrahmen übertragen. Das Kraftmoment, das versucht, den Spulenrahmen und damit auch das Gehäuse des Schwingungsdämpfers anzuheben, verursacht sofort eine stärkere Druckbeaufschlagung des zweiten Bremselementes, mit der Folge, dass es zur Entstehung eines starken Reibmomentes kommt.

Der Schwingungsdämpfer arbeitet zu diesem Zeitpunkt in der so genannten Sperrrichtung.

In weiterer vorteilhafter Ausführungsform weist der Schwingungsdämpfer ein Federelement auf, das den Stützhebel, der bezüglich der Bremsstange unter einem Winkel angeordnet ist, kraftschlüssig beaufschlagt. Das Federelement ist dabei vorzugsweise als Druckfeder ausgebildet und die Druckkraft des Federelements mittels einer Stellschraube einstellbar. Eine solche Ausbildung gewährleitet, dass die Reibkraft, mit der die Bremselemente im Montagezustand an der Bremsstange anliegen, definiert einstellbar ist. Das heißt, über die Druckkraft des Federelements kann die Größe der auf die Bremsstange wirkenden Reibkraft beeinflusst und damit sichergestellt werden, dass der Stützhebel bei Bedarf zuverlässig in Sperrrichtung wirksam wird.

Erfindungsgemäß ist der Stützhebel einerseits begrenzt beweglich mit dem zweiten Bremselement verbunden und andererseits über eine Führungs- und Arretierungseinrichtung in einer Führung des Dämpfergehäuses abgestützt. Die Führungs- und Arretierungseinrichtung ist verschiebbar in der vorzugsweise teilkreisförmig ausgebildeten Führung des Dämpfergehäuses gelagert und dort definiert positionierbar. Die vorteilhaft angeordnete Führungs- und Arretierungseinrichtung bildet während des Betriebes einen Dreh- und Abstützpunkt für den Stützhebel. Das bedeutet, durch entsprechende Positionierung der Führungs- und Arretierungseinrichtung in der teilkreisförmig ausgebildeten Führung des Dämpfergehäuses kann der Winkel, den der Stützhebel in Bezug auf die Bremsstange einnimmt, eingestellt und damit der für das Reibmoment stark mitverantwortliche Anpressdruck des zweiten Bremselementes beeinflusst werden.

In weiterer vorteilhafter Ausführungsform ist vorgesehen, dass das erste und das zweite Bremselement als identische Bauteile ausgebildet sind. Das heißt, das erste und das zweite Bremselemente weisen jeweils zwei Durchgangsbohrungen zum Befestigen und eine Ausnehmung auf. In der Ausnehmung ist auswechselbar jeweils ein Bremsbelag installierbar.

Die Verwendung identisch ausgebildeter Bremselemente hat dabei den Vorteil, dass die Anzahl der unterschiedlich ausgebildeten Bauteile minimiert und damit die Herstellungskosten des erfindungsgemäß ausgebildeten Reibungsdämpfers relativ niedrig gehalten werden können. Die Ausstattung der Bremselemente mit auswechselbaren Bremsbelägen ermöglicht dabei außerdem einen ordnungsgemäßen, kostengünstigen Betrieb des erfindungsgemäßen Reibungsdämpfers. Wenn das Bedienpersonal beispielsweise feststellt, dass eine Kreuzspule während des Spulprozesses nicht ganz rund läuft, kann das an einem etwas schwächer gewordenen Dämpfungsverhalten eines erfindungsgemäßen Reibungsdämpfers liegen. In einem solchen Fall kann durch einfaches Auswechseln der Bremsbeläge problemlos reagiert und die optimalen Reibungsverhältnisse des Dämpfungszylinders wieder hergestellt werden.

Die Erfindung wird nachfolgend anhand eines in den Zeichnungen dargestellten Ausführungsbeispiels näher erläutert.

Es zeigen:
- Fig. 1: in Seitenansicht eine Arbeitsstelle einer Kreuzspulen herstellenden Textilmaschine, im Ausführungsbeispiel eines Kreuzspulautomaten, mit einer Spulvorrichtung, deren Spulenrahmen mit einem erfindungsgemäß ausgebildeten Reibungsdämpfer ausgestattet ist,
- Fig. 2: schematisch in einem etwas größeren Maßstab, eine Spulvorrichtung einer Arbeitsstelle einer Kreuzspulen herstellenden Textilmaschine, die mit einem erfindungsgemäß ausgebildeten Reibungsdämpfer ausgestattet ist,
- Fig. 3: einen erfindungsgemäß ausgebildeten Reibungsdämpfer, im Schnitt,
- Fig. 4: ein Bremselement eines erfindungsgemäß ausgebildeten Reibungsdämpfers.

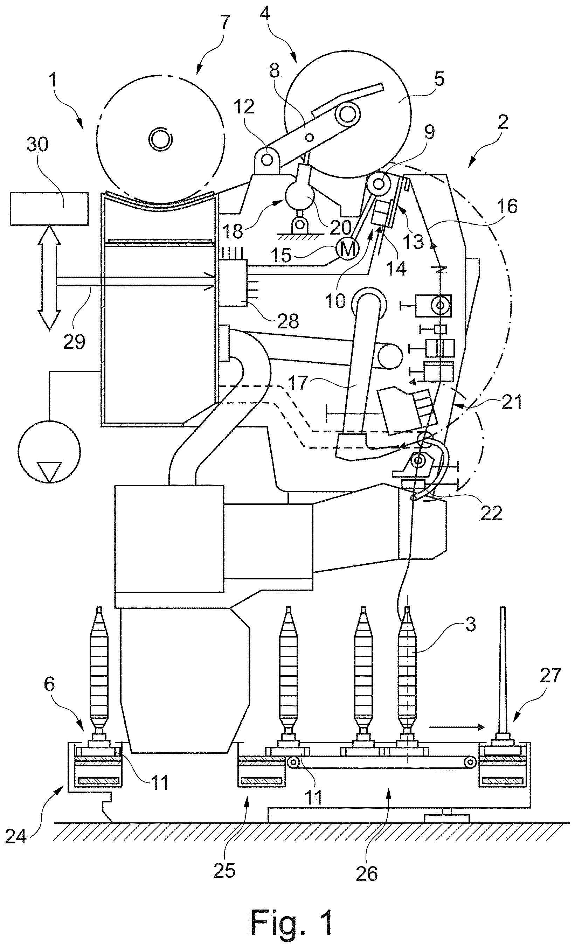

In Fig. 1 ist in Seitenansicht schematisch eine Arbeitsstelle 2 einer Kreuzspulen herstellenden Textilmaschine, im Ausführungsbeispiel eines Kreuzspulautomaten 1, dargestellt. Wie bekannt und daher nicht näher erläutert, werden auf den Arbeitsstellen 2 derartiger Textilmaschinen 1 Spinnkopse 3, die auf im Produktionsprozess vorgeschalteten Ringspinnmaschinen produziert wurden und die nur relativ wenig Garnmaterial aufweisen, zu großvolumigen Kreuzspulen 5 umgespult.

Solche Kreuzspulautomaten 1 weisen oft ein Kops- und Hülsentransportsystem 6 auf, in dem Transportteller 11 umlaufen, auf denen, in vertikaler Ausrichtung, Spinnkopse 3 beziehungsweise Leerhülsen angeordnet sind. Von diesem Kops- und Hülsentransportsystem 6 sind in der Fig. 1 lediglich die Kopszuführstrecke 24, die reversierend antreibbare Speicherstrecke 25, eine der zu den Spulstellen 2 führenden Quertransportstrecken 26 sowie die Hülsenrückführstrecke 27 dargestellt.

Fertiggestellte Kreuzspulen 5 werden üblicherweise mittels eines (nicht dargestellten) selbsttätig arbeitenden Serviceaggregates, vorzugsweise eines Kreuzspulenwechslers, auf eine maschinenlange Kreuzspulen-Transporteinrichtung 7 übergeben und von dieser zu einer maschinenendseitig angeordneten Spulenverladestation oder dergleichen transportiert.

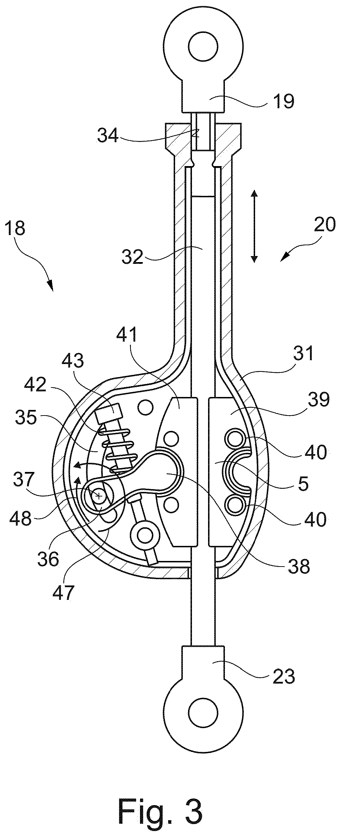

Die zahlreichen, baugleichen Arbeitsstellen 2 derartiger Textilmaschinen 1 verfügen jeweils über verschiedene Einrichtungen, die für einen ordnungsgemäßen Betrieb einer solchen Textilmaschine notwendig sind. Die Arbeitsstellen 2 verfügen beispielsweise jeweils über eine Spulvorrichtung 4, die einen Spulenrahmen 8, eine Spulenantriebswalze 9 sowie eine Fadenchangiereinrichtung 10 zur Traversierung des auf die Auflaufspule auflaufenden Fadens 16 aufweist. Der Spulenrahmen 8 ist dabei um eine Schwenkachse 12, die parallel zur Rotationsachse einer Kreuzspule 5 verläuft, begrenzt beweglich gelagert. Das heißt, die im Spulenrahmen 8 rotierbar gehalterte Kreuzspule 5 liegt während des Spulbetriebes mit ihrer Oberfläche auf der Spulenantriebswalze 9 auf und wird von dieser reibschlüssig mitgenommen. An den Spulenrahmen 8 ist außerdem zur Reduzierung der während des Spulprozesses beim Abrollen der Kreuzspule 5 auftretenden Schwingungen eine Dämpfungseinrichtung 18 angeschlossen, die über einen erfindungsgemäß ausgebildeten Reibungsdämpfer 20 verfügt, der, wie nachfolgend anhand der Fig. 3 näher erläutert, richtungsabhängig unterschiedliche Reibkräfte erzeugt.

Wie in Fig. 1 angedeutet, wird die Spulenantriebswalze 9 über einen Elektromotor 15, der über eine Steuerleitung mit einem Arbeitsstellenrechner 28 in Verbindung steht, einzelmotorisch angetrieben. Auch der Antrieb 14 der Fadenchangiereinrichtung 10, die vorzugsweise einen Fingerfadenführer 13 aufweist, der während des Spulbetriebes den auf die Auflaufspule auflaufenden Faden 16 traversiert, ist über eine Steuerleitung an den Arbeitsstellenrechner 28 angeschlossen, der seinerseits über ein Bussystem 29 mit der Zentralsteuereinheit 30 des Kreuzspulautomaten 1 in Verbindung steht.

Die Arbeitsstellen 2 solcher Kreuzspulautomaten 1 verfügen in der Regel außerdem jeweils über eine Fadenverbindungseinrichtung 21, beispielsweise einen Pneumatikspleißer, ein Greiferrohr 22 zum Handhaben des Unterfadens sowie über eine Saugdüse 17, mit der der nach einer Spulunterbrechung auf die Kreuzspule 5 aufgelaufene Oberfaden aufgenommen und in die Fadenverbindungseinrichtung 21 eingelegt werden kann.

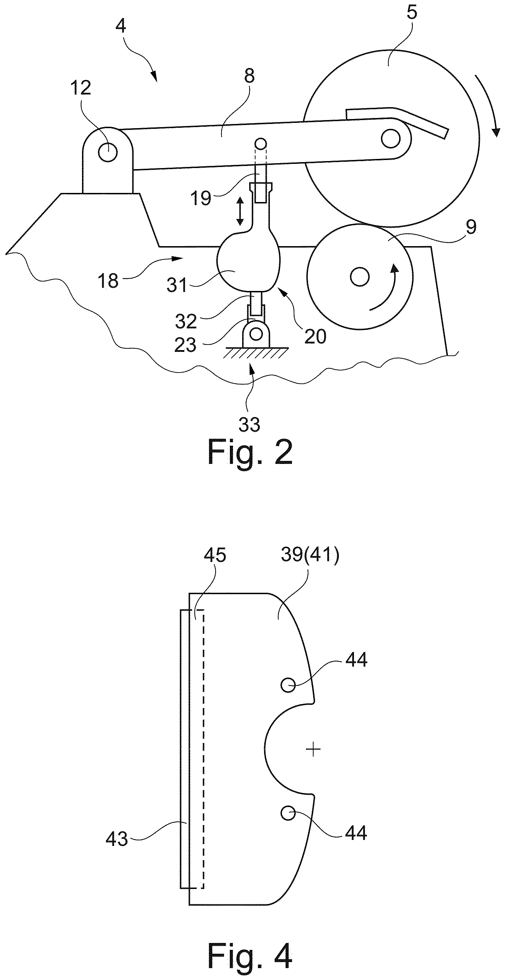

Die Fig. 2 zeigt schematisch und in einem etwas größeren Maßstab eine Spulvorrichtung 4 einer Arbeitsstelle 2 einer Kreuzspulen herstellenden Textilmaschine 1 mit einer erfindungsgemäß ausgebildeten Schwingungsdämpfungseinrichtung 18. Wie angedeutet, weist die Schwingungsdämpfungseinrichtung 18 einen Reibungsdämpfer 20 auf, dessen Dämpfergehäuse 31 über eine erste Lagerstange 19 mit dem Spulenrahmen 8 verbunden und somit mit diesem bewegbar ist.

Wie ersichtlich, ist außerdem die Bremsstange 32 des Reibungsdämpfers 18 über eine zweite Lagerstange 23 an eine stationäre Lagerstelle 33 der Arbeitsstelle 2 angeschlossen.

Der in Fig. 3 im Schnitt und im Detail dargestellte, erfindungsgemäß ausgebildete Reibungsdämpfer 20 der Schwingungsdämpfungseinrichtung 18 verfügt über ein Dämpfergehäuse 31, das oben mit einem Anschlussgewinde 34 versehen ist. In diesem Anschlussgewinde 34 ist eine erste Lagerstange 19 festlegbar, mit der das Dämpfergehäuse 31 im Montagezustand an den Spulenrahmen 8 angeschlossen ist. Innerhalb des Dämpfungsgehäuses 31 ist eine Bremsstange 32 angeordnet, die über eine zweite Lagerstange 23 an eine stationäre Lagerstelle 33 angeschlossen ist. Das Dämpfergehäuse 31 ist dabei bezüglich der Bremsstange 32 verschiebbar gelagert.

Wie weiter ersichtlich, liegen an der Bremsstange 32 kraftschlüssig zwei identisch ausgebildete Bremselemente 39, 41 an. Das erste Bremselement 39 ist, beispielsweise über Schraubenbolzen 40, stationär im Dämpfungsgehäuse 31 festgelegt, während das zweite Bremselement 41 beweglich im Dämpfergehäuse 31 gelagert ist. Das heißt, das Dämpfungsgehäuse 31 weist eine teilkreisförmig ausgebildete Führung 35 auf, in der verschiebbar und bei Bedarf funktionsgerecht positionierbar eine Führungs- und Arretierungseinrichtung 36 angeordnet ist. Die Führungs- und Arretierungseinrichtung 36 bildet einen Dreh- und Abstützpunkt 37 für einen Stützhebel 38. Der Stützhebel 38 ist seinerseits bezüglich der Bremsstange 32 unter einem Winkel angeordnet und außerdem begrenzt beweglich mit dem zweiten Bremselement 41 verbunden. Wie dargestellt, wird der Stützhebel 38 des Weiteren durch ein Federelement, vorzugsweise eine Druckfeder 42, beaufschlagt, deren wirksame Druckkraft mittels einer Einstellschraube 43 vorgebbar ist.

Die Fig. 4 zeigt eines der identisch ausgebildeten Bremselemente 39, 41.

Die Bremselemente 39, 41 weisen jeweils zwei Durchgangsbohrungen 44 für eine bedarfsgerechte Fixierung der Bremselemente sowie eine Ausnehmung 45 zur sicheren Aufnahme eines auswechselbaren Bremsbelages 46 auf. Das heißt, mittels Schraubenbolzen 40, die die Durchgangsbohrungen 44 durchfassen, ist das erste Bremselement 39 stationär im Dämpfergehäuse 31 festlegbar. In den Ausnehmungen 45 ist jeweils ein auswechselbarer Bremsbelag 46 installierbar, das heißt, ein Bremsbelag 46, der bei Bedarf leicht gewechselt werden kann.

### Funktion eines erfindungsgemäß ausgebildeten Reibungsdämpfers:

Während des Spulbetriebes wird der Spulrahmen 8 durch die auf der Spulenantriebstrommel 9 aufliegende und von dieser reibschlüssig angetriebenen Kreuzspule 5 ständig in Schwingungen versetzt, das heißt, die etwas unrund laufende Kreuzspule 5 hebt immer wieder etwas von der Spulenantriebstrommel 9 ab.

Diese Schwingungen werden über die erste Lagerstange 19 auf das Dämpfergehäuse 31 des Reibungsdämpfers 20 übertragen, dessen Bremsstange 32 über die zweite Lagerstange 23 stationär an eine Lagerstelle 33 angeschlossen ist. Das heißt, bei jedem Abheben der Kreuzspule 5 von ihrer zugehörigen Spulenantriebstrommel 9 wird auch das Dämpfergehäuse 31 mit einem Hubmoment beaufschlagt, dem die kraftschlüssig an der Bremsstange 32 anliegenden Bremselemente 39, 41 entgegenstehen.

Beim erfindungsgemäß ausgebildeten Reibungsdämpfer 20 wird beim Abheben der Kreuzspule 5 das Dämpfergehäuse 31 des erfindungsgemäß ausgebildeten Reibungsdämpfers 20 so beaufschlagt, dass der winkelig angeordnete Stützhebel 38, wie durch den Pfeil 48 angedeutet, mit einem Drehmoment beaufschlagt wird, das ein zusätzliches Moment auf das Bremselement 41 ausübt, mit der Folge, dass die durch die Druckfeder 42 vorgegebene Bremskraft der Bremselemente 39, 41 deutlich erhöht und damit die Aufwärtsschwingung des Spulenrahmens 8 stark reduziert bzw. nahezu unterbunden wird.

Bei der folgenden, der so genannten Sperrrichtung des Reibungsdämpfers 20 entgegengesetzten Abwärtsschwingung des Spulenrahmens 8 wird auch das Dämpfergehäuse 31 in Richtung der Spulenantriebstrommel 9 beaufschlagt, mit der Folge, dass der winkelig angeordnete Stützhebel 38, wie durch den Pfeil 47 angedeutet, so beaufschlagt wird, dass kein zusätzliches Moment mehr auf das zweite Bremselement 41 ausgeübt wird. Die durch die Bremselemente 39, 41 auf die Bremsstange 32 ausgeübte Bremskraft wird dadurch deutlich reduziert und der Spulenrahmen 8 kann in eine Stellung zurückschwingen, in der die Kreuzspule 5 wieder ordnungsgemäß auf der Spulenantriebstrommel 9 rollt.

Wie ersichtlich und vorstehend bereits angedeutet, ist die Schwingungsdämpfereinrichtung 18 mit dem erfindungsgemäß ausgebildeten Reibungsdämpfer 20 sehr kompakt ausgebildet und kann daher auch nachträglich an bereits ausgelieferten Textilmaschinen eingesetzt werden, das heißt, an Textilmaschinen, die bislang mit Dämpfungszylindern ausgestattet sind, die aufgrund ihres hydraulischen Dämpfungsmediums oft etwas problematisch sind. Aufgrund ihrer kompakten Bauweise kommt es beim Einsatz der erfindungsgemäßen Reibungsdämpfer 20 zu keinerlei Behinderungen möglicher Serviceaggregate.

**Bezugszeichenliste**

| | | | |
|---|---|---|---|
| 1 | Kreuzspulautomat | 25 | Speicherstrecke |
| 2 | Arbeitsstelle | 26 | Quertransportstrecke |
| 3 | Spinnkops | 27 | Hülsenrückführstrecke |
| 4 | Spulvorrichtung | 28 | Arbeitsstellenrechner |
| 5 | Kreuzspule | 29 | Bussystem |
| 6 | Kops- und Hülsentransporteinrichtung | 30 | Zentralsteuereinheit |
| | | 31 | Dämpfergehäuse |
| 7 | Kreuzspulen-Transporteinrichtung | 32 | Bremsstange |
| 8 | Spulenrahmen | 33 | stationäre Lagerstelle |
| 9 | Spulenantriebstrommel | 34 | Anschlussgewinde |
| 10 | Fadenchangiereinrichtung | 35 | teilkreisförmige Führung |
| 11 | Transportteller | 36 | Führungs- und Arretierungseinrichtung |
| 12 | Schwenkachse | | |
| 13 | Fingerfadenführer | 37 | Dreh- und Abstützpunkt |
| 14 | Antrieb | 38 | Stützhebel |
| 15 | Elektromotor | 39 | erstes Bremselement |
| 16 | Faden | 40 | Schraubenbolzen |
| 17 | Saugdüse | 41 | zweites Bremselement |
| 18 | Dämpfungseinrichtung | 42 | Druckfeder |
| 19 | erste Lagerstang7 | 43 | Einstellschraube |
| 20 | Reibungsdämpfer | 44 | Durchgangsbohrung |
| 21 | Fadenverbindungseinrichtung | 45 | Ausnehmung |
| 22 | Greiferrohr | 46 | Bremsbelag |
| 23 | zweiten Lagerstange | 47 | Pfeil |
| 24 | Kopszuführstrecke | 48 | Pfeil |

## Patentansprüche

1. Schwingungsdämpfungseinrichtung (18) für eine Spulvorrichtung (4) einer Kreuzspulen (5) herstellenden Textilmaschine (1) zur Reduzierung der während des Spulbetriebes der Textilmaschine (1) am schwenkbar gelagerten Spulenrahmen (8) auftretenden Schwingungen, wobei der Schwingungsdämpfer als Reibungsdämpfer (20) ausgebildet ist, der je nach Arbeitsrichtung unterschiedlich stark wirksame Reibkräfte aufweist, wobei die während des Spulbetriebes beim Abheben der Kreuzspule (5) wirksamen Reibkräfte größer sind als die während der Rückstellung der Kreuzspule (5) wirksamen Reibkräfte, wobei der Reibungsdämpfer (20) eine bezüglich seines Dämpfergehäuses (31) verschiebbar gelagerte Bremsstange (32), ein stationär angeordnetes erstes Bremselement (39) und ein durch einen beweglichen Stützhebel (38) an die Bremsstange (31) anstellbares, beweglich gelagertes, zweites Bremselement (41) aufweist,
**dadurch gekennzeichnet, dass**
der Stützhebel (38) einerseits begrenzt beweglich mit dem zweiten Bremselement (41) verbunden und andererseits über eine Führungs- und Arretierungseinrichtung (36) in einer Führung (35) des Dämpfergehäuses (31) abgestützt ist.

2. Schwingungsdämpfungseinrichtung (18) nach Anspruch 1, **dadurch gekennzeichnet, dass** ein Federelement (42) vorhanden ist, das den bezüglich der Bremsstange (31) unter einem Winkel angeordneten Stützhebel (38) kraftschlüssig beaufschlagt.

3. Schwingungsdämpfungseinrichtung (18) nach Anspruch 2, **dadurch gekennzeichnet, dass** das Federelement als Druckfeder (42) ausgebildet ist, deren wirksame Druckkraft mittels einer Einstellschraube (43) definiert vorgebbar ist.

4. Schwingungsdämpfungseinrichtung (18) nach einem der vorherigen Ansprüche, **dadurch gekennzeichnet, dass** die Führungs- und Arretierungseinrichtung (36) einen Dreh- und Abstützpunkt (37) für den Stützhebel (38) bildet und verschieb- sowie definiert positionierbar in der Führung (35) des Dämpfergehäuses (31) gelagert ist.

5. Schwingungsdämpfungseinrichtung (18) nach einem der Ansprüche 1 bis 4, **dadurch gekennzeichnet, dass** die Führung (35) teilkreisförmig ausgebildet ist.

6. Schwingungsdämpfungseinrichtung (18) nach einem der vorherigen Ansprüche, **dadurch gekennzeichnet, dass** das erste und das zweite Bremselement (39, 41) identisch ausgebildet sind.

7. Schwingungsdämpfungseinrichtung (18) nach Anspruch 6, **dadurch gekennzeichnet, dass** die Bremselemente (39, 41) jeweils mit Durchgangsbohrungen (40) zum Festlegen und einer Ausnehmung (45) für einen auswechselbaren Bremsbelag (46) ausgestattet sind.

## Claims

1. Vibration damping device (18) for a winding device (4) of a textile machine (1) that produces cross-wound packages (5), the vibration damping device (18) being provided for reducing the vibrations that occur at the pivotably mounted package cradle (8) during the winding operation of the textile machine (1),
wherein the vibration damper is in the form of a friction damper (20) which has friction forces of different intensity depending on the working direction, the friction forces effective as the cross-wound package (5) lifts off during the winding operation being greater than the friction forces effective during the return movement of the cross-wound package (5),
wherein the friction damper (20) has a braking rod (32), which is mounted for sliding relative to the damper housing (31) of the friction damper (20), a stationary first braking element (39), and a movably mounted second braking element (41), which can be placed against the braking rod (31) by means of a movable support lever (38),
**characterized in that**
one end of the support lever (38) is connected to the second braking element (41) such that limited movement is allowed, while the other end is supported in a guide (35) of the damper housing (31) by means of a guiding and arresting device (36).

2. Vibration damping device (18) according to claim 1, **characterized in that** a spring element (42) is provided, which acts, in frictional contact, on the support lever (38), the support lever (38) being arranged at angle to the braking rod (31).

3. Vibration damping device (18) according to claim 2, **characterized in that** the spring element is in the form of a compression spring (42), the effective compressive force of which can be set in a defined manner by means of an adjustment screw (43).

4. Vibration damping device (18) according to one of the preceding claims, **characterized in that** the guiding and arresting device (36) forms a pivoting and support point (37) for the support lever (38) and is mounted in the guide (35) of the damper housing (31) such that the guiding and arresting device (36) can be slid therein and can be positioned therein in a defined manner.

5. Vibration damping device (18) according to one of the claims 1 to 4, **characterized in that** the guide (35) is part-circular-shaped.

6. Vibration damping device (18) according to one of the preceding claims, **characterized in that** the first braking element (39) and the second braking element (41) are identical.

7. Vibration damping device (18) according to claim 6, **characterized in that** the braking elements (39, 41) are each equipped with through-bores (40) for fastening and with a recess (45) for an exchangeable brake lining (46).

## Revendications

1. Dispositif d'amortissement de vibrations (18) pour un dispositif de bobinage (4) d'une machine textile (1) fabriquant des bobines croisées (5), destiné à réduire les vibrations apparaissant sur le cadre de bobine (8) monté de manière à pouvoir pivoter pendant le fonctionnement de bobinage de la machine textile (1), dans lequel l'amortisseur de vibrations est réalisé sous la forme d'un amortisseur à friction (20) qui présente des forces de friction agissant avec des intensités différentes respectivement selon le sens de travail, dans lequel les forces de friction agissant pendant le fonctionnement de bobinage lors du soulèvement de la bobine croisée (5) sont supérieures aux forces de friction agissant pendant le rappel de la bobine croisée (5), dans lequel l'amortisseur à friction (20) présente une tige de freinage (32) montée de manière à pouvoir coulisser par rapport à son boîtier d'amortisseur (31), un premier élément de freinage (39) disposé de manière à être stationnaire et un second élément de freinage (41) monté de manière à être mobile et pouvant s'appuyer contre la tige de freinage (31) au moyen d'un levier d'appui (38) mobile,
**caractérisé en ce que**
le levier d'appui (38) est, d'une part, relié avec une mobilité limitée au second élément de freinage (41) et, d'autre part, s'appuie dans un guidage (35) du boîtier d'amortisseur (31) par l'intermédiaire d'un dispositif de guidage et de blocage (36).

2. Dispositif d'amortissement de vibrations (18) selon la revendication 1, **caractérisé en ce qu'**un élément formant ressort (42) est présent, lequel sollicite par force le levier d'appui (38) disposé à un angle par rapport à la tige de freinage (31).

3. Dispositif d'amortissement de vibrations (18) selon la revendication 2, **caractérisé en ce que** l'élément formant ressort est conçu comme un ressort de compression (42) dont la force de compression efficace peut être prédéterminée de manière définie au moyen d'une vis de réglage (43).

4. Dispositif d'amortissement de vibrations (18) selon l'une des revendications précédentes, **caractérisé en ce que** le dispositif de guidage et de blocage (36) forme un point de rotation et d'appui (37) pour le levier d'appui (38) et est monté de manière à pouvoir coulisser et être positionné de manière définie dans le guidage (35) du boîtier d'amortisseur (31).

5. Dispositif d'amortissement de vibrations (18) selon l'une des revendications 1 à 4, **caractérisé en ce que** le guidage (35) est réalisé en forme de cercle partiel.

6. Dispositif d'amortissement de vibrations (18) selon l'une des revendications précédentes, **caractérisé en ce que** le premier et le second élément de freinage (39, 41) sont réalisés de manière à être identiques.

7. Dispositif d'amortissement de vibrations (18) selon la revendication 6, **caractérisé en ce que** les éléments de freinage (39, 41) sont respectivement pourvus d'alésages traversants (40) pour la fixation et d'un évidement (45) pour une garniture de frein (46) remplaçable.
